# EUROPEAN PATENT APPLICATION

(11) **EP 4 650 951 A1**
(43) Date of publication of application: **19.11.2025**
(21) Application number: 24863833.0
(22) Date of filing: 04.06.2024
(51) Int. Cl.: G06F 9/30

(54) **DATA PREFETCHING METHOD AND APPARATUS, AND ELECTRONIC DEVICE, ELECTRONIC APPARATUS AND MEDIUM**

(30) Priority: 01.04.2024 CN 202410391499
(71) Applicant: Hygon Information Technology Co., Ltd., Tianjin 300392 (CN)
(72) Inventor: WANG, Zichen, Tianjin 300392 (CN); JIN, Weisong, Tianjin 300392 (CN)
(74) Representative: Regimbeau
(86) International application number: PCT/CN2024/097328
(87) International publication number: WO 2025/208699

(57) **Abstract**

Embodiments of the present disclosure provides a data prefetching method and apparatus, an electronic device, an electronic apparatus, and a medium. The data prefetching method according to the embodiments of the present disclosure is applicable to an electronic device including a memory, a cache and a prefetcher. The method includes: acquiring performance data characterizing a usage rate of the memory (S101); adjusting an aggressiveness level of the prefetcher according to the performance data (S102), wherein the aggressiveness level is used to control a confidence condition for the prefetcher to generate prefetches and a quantity of the prefetches; and performing a prefetch operation according to the adjusted aggressiveness level (S103).

## Description

This application claims priority to Chinese Patent Application No. 2024103914997, filed on April 1, 2024, the disclosure of which is incorporated herein by reference in its entirety as a part of the present application.

### TECHNICAL FIELD

Embodiments of the present disclosure relate to a data prefetching method and apparatus, an electronic device, an electronic apparatus, and a medium.

### BACKGROUND

Modern multi-emission high performance CPU (Central Processing Unit) includes at least one processor core (CPU Core). Each CPU core may include multiple execution units to execute instructions. In the existing CPU architecture, program instructions and data are typically stored in the DRAM memory (Dynamic Random Access Memory). The operating frequency of the CPU core is much higher than the operating frequency of the DRAM memory. Therefore, acquiring data and instructions from the memory requires hundreds of clock cycles of the CPU core, which inevitably causes the CPU core to idle due to waiting for relevant instructions and data, resulting in performance degradation. In response to this, modern high-performance CPUs store recently accessed data by setting up a multi-level cache architecture, and use prefetchers to discover the patterns of CPU data access, thereby pre fetching the data and instructions to be accessed into the cache in advance.

However, too many inaccurate prefetch requests may lead to long memory access delays and increased cache pollution, which may have a large negative impact on the performance of the CPU, ultimately leading to reduced running performance. This problem is more significant for the CPU that supports SMT (Simultaneous Multithreading).

### SUMMARY

Embodiments of the present disclosure provide a data prefetching method and apparatus, an electronic device, an electronic apparatus, and a medium for adjusting an aggressiveness level according to performance data characterizing the usage rate of a memory at which a prefetcher prefetches, thereby enabling the prefetcher to dynamically control conditions under which prefetches are generated according to the adjusted aggressiveness level, thus, accuracy and coverage of prefetching can be improvded and overall operating performance of the electronic device can be enhanced.

According to an aspect of the present disclosure, a data prefetching method is provided. The method is applicable to an electronic device including a memory, a cache and a prefetcher, and the method includes: acquiring performance data characterizing a usage rate of the memory; adjusting an aggressiveness level of the prefetcher according to the performance data, wherein the aggressiveness level is used to control a confidence condition for the prefetcher to generate prefetches and a quantity of the prefetches; and performing a prefetch operation according to the adjusted aggressiveness level.

According to embodiments of the present disclosure, the performance data includes one or more of: an average access delay of the memory; an occupancy rate of a miss-status handling register of the electronic device; a bandwidth usage rate of the memory; and an occupancy rate of a queue in an on-chip interconnection network of the electronic device.

According to embodiments of the present disclosure, in a case that the performance data includes the average access delay of the memory, the acquiring performance data characterizing a usage rate of the memory includes: acquiring historical average access delay time of the memory before a time window; acquiring current average access delay time of the memory within the time window; and calculating a weighted average of the historical average access delay time and the current average access delay time, wherein the weighted average is served as the average access delay of the memory.

According to embodiments of the present disclosure, wherein the electronic device is provided with a time window counter, a delay counter, a backfill counter and a historical delay counter; and the acquiring the performance data characterizing the usage rate of the memory includes: recording the time window by the time window counter, wherein when the time window counter reaches a set threshold, triggering calculation of the average access delay and adjusting the aggressiveness level according to the average access delay; recording total delay time of cache misses within the time window by the delay counter; recording the quantity of access backfill of the cache misses within the time window by the backfill counter; recording the historical average access delay time before the time window by the historical delay counter; and calculating the current average access delay time based on the total delay time of the cache misses within the time window and the quantity of access backfill, and performing a weighted average on the current average access delay time and the historical average access delay time to obtain the average access delay time.

According to embodiments of the present disclosure, the adjusting an aggressiveness level of the prefetcher according to the performance data includes: increasing an aggressiveness level of the prefetcher such that an amount of prefetching for the memory is increased in response to the average access delay is less than a first threshold; and reducing the aggressiveness level of the prefetcher such that the amount of prefetching for the memory is reduced in response to the average access delay is greater than a second threshold.

According to embodiments of the present disclosure, the electronic device synchronously processes a plurality of threads, and the acquiring the performance data characterizing the usage rate of the memory includes: for each thread of the plurality of threads, respectively acquiring performance data characterizing the usage rate of the memory; and the adjusting an aggressiveness level of the prefetcher according to the performance data includes: adjusting the aggressiveness level of the prefetcher for each thread based on the respective performance data, wherein the aggressiveness level is set for each thread in the prefetcher.

According to embodiments of the present disclosure, the recording the time window by the time window counter includes one of: for a processor clock cycle of the electronic device, the time window counter increments by one for each clock cycle; for a cache access of the electronic device, the time window counter increments by one for each cache access; for a cache access miss event of the electronic device, the time window counter increments by one for each cache access miss event; or for a prefetch request of the prefetcher, the time window counter increments by one for each prefetch request.

According to embodiments of the present disclosure, the cache includes a multi-level cache, and the cache misses are missing a last-level cache of the multi-level cache.

According to another aspect of the present disclosure, an electronic device is provided. The electronic device includes a processor core, a memory, a cache, and a prefetcher. The processor core is configured to: acquire performance data characterizing the usage rate of the memory, and adjust an aggressiveness level of the prefetcher according to the performance data, wherein the aggressiveness level is used to control a confidence condition for the prefetcher to generate prefetches and a quantity of the prefetches. The prefetcher is configured to perform a prefetch operation according to the adjusted aggressiveness level.

According to yet another aspect of the present disclosure, a data prefetching apparatus is provided. The data prefetching apparatus includes an acquisition unit, configured to acquire performance data characterizing the usage rate of the memory; an adjustment unit, configured to adjust an aggressiveness level of the prefetcher according to the performance data, wherein the aggressiveness level is used to control a confidence condition for the prefetcher to generate prefetches and a quantity of the prefetches; and a prefetch unit, configured to perform a prefetch operation according to the adjusted aggressiveness level.

According to yet another aspect of the present disclosure, an electronic apparatus is provided. The electronic apparatus includes at least one processor and at least one storage having stored thereon computer readable code, wherein the computer readable code, when executed by the at least one processor, causes the at least one processor to perform the steps of the data prefetching method according to embodiments of the present disclosure.

According to yet another aspect of the present disclosure, a non-transitory computer-readable storage medium is provided. The medium has stored thereon computer-readable instructions, wherein the computer-readable instructions, when executed by a processor, cause the processor to perform the steps of the data prefetching method according to embodiments of the present disclosure.

### BRIEF DESCRIPTION OF DRAWINGS

In order to provide a clearer explanation of the technical solution of the disclosed embodiments, a brief introduction will be given to the accompanying drawings of the embodiments. It is obvious that the accompanying drawings described below only relate to some embodiments of the present disclosure, and do not limit the present disclosure.
Fig. 1 shows a flowchart of a data prefetcher for training and prefetching;
Fig. 2 shows a schematic flow diagram of a data prefetching method according to some embodiments of the present disclosure;
Fig. 3 shows a schematic diagram of adjusting an aggressiveness level of the prefetcher according to some embodiments of the present disclosure;
Fig. 4 shows a schematic diagram of adjusting an aggressiveness level of the prefetcher for SMT according to some embodiments of the present disclosure;
Fig. 5 shows a schematic block diagram of an electronic device according to some embodiments of the present disclosure;
Fig. 6 shows a schematic block diagram of a data prefetching apparatus according to some embodiments of the present disclosure;
Fig. 7 shows a schematic block diagram of an electronic apparatus according to some embodiments of the present disclosure; and
Fig. 8 shows a schematic diagram of a computer-readable storage medium according to some embodiments of the disclosure.

### DETAILED DESCRIPTION

The following will provide a clear and complete description of the technical solution in the disclosed embodiments, in conjunction with the accompanying drawings. Obviously, the described embodiments are only a part of the embodiments of the present diclosure, not all of them. Based on the embodiments disclosed herein, all other embodiments obtained by ordinary skilled persons in this field without creative labor are within the scope of protection of the present disclosure.

In addition, as stated in the present disclosure and claims, unless the context clearly indicates an exception, words such as "a", "an", "one", and/or "the" do not specifically refer to the singular, but may also include the plural. The terms "first", "second", and similar words used in the present disclosure do not indicate any order, quantity, or importance, but are only used to distinguish different components. Similarly, words such as "including" or "containing" refer to the elements or objects that appear before the word, including those listed after the word and their equivalents, without excluding other elements or objects. Words like "connection" or "connecting" are not limited to physical or mechanical connections, but can include electrical connections, whether direct or indirect.

Flowcharts are used in the present disclosure to illustrate the steps of the method according to the embodiments disclosed herein. It should be understood that the preceding or following steps may not be carried out precisely in order. On the contrary, various steps can be processed in reverse order or simultaneously. Meanwhile, other operations can also be added to these processes.

It can be understood that the professional terms, nouns, and other descriptions mentioned herein have meanings that are well-known to those skilled in the art.

With the development of more extensive general computing scenarios such as artificial intelligence, higher requirements are put forward for computing power, processing efficiency, bandwidth, and others of processor chips. How to provide high-performance electronic devices in terms of software and hardware has become an important research direction.

The explanation of terms that may be involved in at least some of the embodiments disclosed herein is as follows.

The electronic device usually includes one or more processor cores (for example, CPU Cores) and a multi-level cache. In a multi-level cache architecture, a first level cache storage (L1) has the fastest access speed but the smallest capacity, and is usually set within the processor core. The last level cache storage (LLC, generally being the third level, L3) has the largest cache storage capacity and the slowest access speed, and is usually shared by a plurality of processor cores. The second level cache storage (L2) has the access speed and capacity between those of the LI cache storage and the LLC cache storage, and is also typically provided within the processor core.

Data Prefetch: in the CPU architecture, the program instructions and data may be stored in the Dynamic Random Access Memory (DRAM). The operating frequency of the processor core is much higher than the operating frequency of the DRAM memory. Therefore, obtainging data and instructions from the memory requires hundreds of processor core clock cycles, causing the processor core to idle while waiting for the associated instructions and data, resulting in a loss of performance. Therefore, the modern high-performance electronic devices include the multi-level cache architecture to store recently accessed data. Also, the prefetcher is used to discover the data access rules of the CPU so as to prefetch the data to be accessed and instructions into the cache in advance.

Prefetcher: A prefetcher for prefetching instructions is referred to as an instruction prefetcher. A prefetcher for prefetching data is referred to as a data prefetcher. For example, the data prefetcher may include a first-level data prefetcher (i.e., a data prefetcher that prefetches target data into a first-level cache storage (L1 Cache)), a second-level data prefetcher (i.e., a data prefetcher that prefetches target data into a second-level cache storage (L2 Cache)), a last-level data prefetcher (i.e., a data prefetcher that prefetches target data into a last-level cache storage (LLC Cache)), etc.

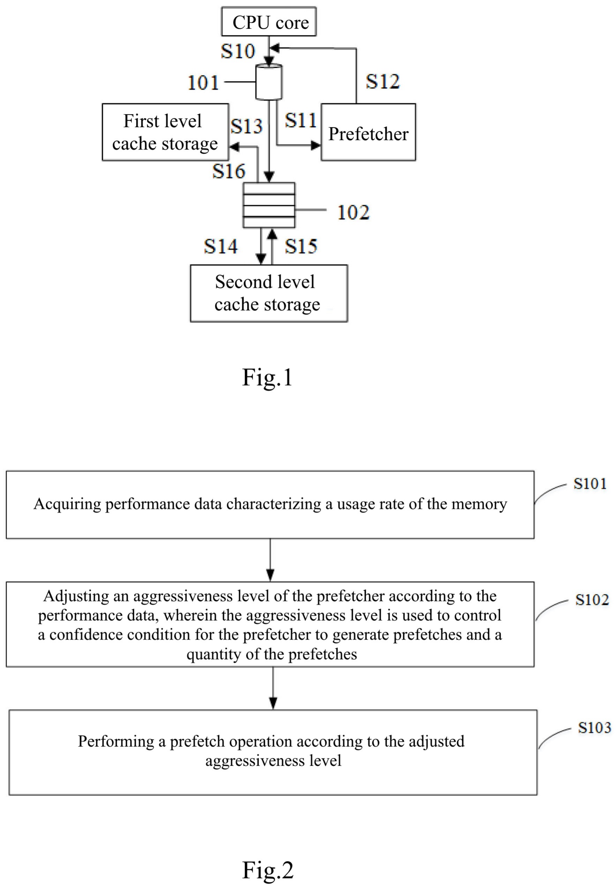

As an example, Fig. 1 shows a flowchart of a data prefetcher for training and prefetching. The data prefetcher shown in Fig. 1 is a first-level prefetcher, i.e., a prefetcher that prefetches target data or instructions into a first-level cache storage. In addition, the prefetcher shown in Fig. 1 is trained by virtual addresses.

As shown in Fig. 1, the prefetcher performs training and prefetching by the following steps S11-S16.

Step S11, the prefetcher receives the virtual address and other attributes of at least a part (e.g., all) of the access requests (e.g., historical access requests) from the CPU core, trains with the virtual address and other attributes of the access requests (e.g., historical access requests) to obtain access rules for the CPU core and form a prefetch request based on the access rules.

Step S12, the prefetch virtual address of the prefetch request is translated into a prefetch physical address by an address translator 101. A determination is made based on the prefetch physical address whether the target data or instruction of the prefetch request is present in the first-level cache storage. If the target data or instruction of the prefetch request is present in the first-level cache storage, the prefetch request is discarded. Correspondingly, there is no need to perform steps S13 to S16 for this prefetch request.

Step S13, if the target data or instruction of the prefetch request does not exist in the first-level cache storage, the prefetch object (e.g., target data or instruction) of the desired prefetch is fetched from the second-level cache storage based on the prefetch physical address. For example, a storage item is applied from the miss address cache storage 102 and assigned to the prefetch request.

Step S14, the miss address cache storage 102 requests the target data or instruction to the next level of cache storage (e.g., a second-level cache storage) based on the storage item.

Step S15, the next level of cache storage fetches the target data or instruction and returns the target data or instruction to the miss address cache storage 102.

As shown in Fig. 1, where the target data or instructions of the prefetch request are stored in the L2 cache storage, the L2 cache storage retrieves the target data or instructions of the data prefetch request from the L2 cache storage. Where the target data or instructions for the prefetch request are not stored in the L2 cache storage, the L2 cache storage may acquire the target data or instructions for the prefetch request from a storage located at a next level of the L2 cache storage (e.g., the last level of cache storage or memory). For example, the memory located next to the second-level cache storage may be a third-level cache storage (e.g., a last-level cache storage, Last Level Cache) or a memory (e.g., DRAM).

Step S16, the miss address cache storage 102, upon receiving the target data or instruction, places the target data or instruction into the first-level cache storage to complete the prefetch operation.

It should be noted that while the prefetcher is used for training and prefetching, the CPU core may be also operated to read data or instructions to perform the processing of the associated thread. Correspondingly, for ease of description, Fig. 1 also shows a portion of the flow of the CPU core reading data or instructions. For example, the flow of reading data or instructions by the CPU core includes the following steps.

Step S10, the CPU core outputs the virtual address of the target data/instruction of the access request to an address translator 101 (e.g., an address translation pipeline), which translates the virtual address into a physical address, and then the CPU core determines whether the target data/instruction of the access request is in the first-level cache storage.

For example, if the target data or instruction of the access request exists in the first-level cache storage, the target data or instruction of the access request is fetched from the first-level cache storage. If the target data or instruction of the access request does not exist in the first-level cache storage, a storage item is applied to the miss address cache storage and allocated to the access request. The miss address cache storage requests the target data or instruction of the access request to the next level of cache storage (e.g., a secodn level cache storage, L2 Cache) based on the storage item. The next level of cache storage acquires the target data or instructions for the access request and returns the target data or instructions for the access request to the miss address cache storage 102. The miss address cache then writes the target data or instruction of the access request to the first-level cache storage. The first-level cache storage then provides the target data or instructions of the access request to the CPU core for the CPU core to complete the operation of reading the data or instructions.

In high performance CPU, prefetching of virtual addresses for data/instructions tends to share an address translator/address translation pipeline with normal data/instruction reading. In a high frequency and high performance CPU, the address translation pipeline may be multi-stage. Since the importance and priority of the prefetch operation is lower than the importance and priority of the CPU to read data or instructions. Thus, a prefetch operation may need to wait multiple clock cycles to enter the address translation pipeline. At the same time, due to the multiple pipelined clock cycles of address translation, such a prefetch requires multiple clocks to be issued to the next level of cache. In many cases, the prefetching operation is time-efficient, and the corresponding CPU core access request tends to occur sooner. The delay caused by the above-mentioned address translation tends to cause the prefetched data to arrive at the first-level cache storage too late, so that the cache miss cannot be completely avoided.

In many high-performance CPUs, the amount of storage with the miss address cache determines the quantity of requests that miss the first-level cache storage at the same time, so that the miss address cache is a relatively scarce resource. In the event that the miss address cache is full, a new request will be rejected and the address translation pipeline will need to be repeated to re-determine the storage items that can be allocated to the miss address cache storage. This further increases the delay for cache storage prefetching, reducing the effectiveness of the system.

Prefetch Metrics: the prefetch metrics are criteria that evaluate prefetcher prefetching performance, which may include Accuracy, Coverage, and Lateness. The Accuracy is the ratio of the quantity of correct prefetches to the total quantity of prefetches. The coverage refers to the ratio of the quantity of prefetched data hit by Demand requests (a request generated by memory access instructions in the program) to the total quantity of Demand requests. The lateness refers to the ratio of the quantity of prefetches that are correct but emitted too late to the total quantity of prefetches. The Accuracy and Coverage are often difficult to balance at the same time.

Prefetcher Aggressiveness: the higher the prefetching aggressiveness level of prefetching performed by the prefetcher, the easier the conditions for generating prefetching and the greater the quantity of prefetching generated at the same time. The lower the prefetch aggressiveness level at which the prefetcher prefetches, the stricter the conditions under which prefetches are generated and the less the amount of prefetch data that is generated. Generally speaking, for the same prefetcher, the higher the set aggressiveness level, the greater the quantity of prefetches that can be prefetched at one time due to the easier conditions for prefetching, so that the prefetching coverage can be relatively guaranteed. However, the more processor resources and memory bandwidth are consumed, which will inevitably reduce the accuracy of prefetching. On the other hand, for the same prefetcher, the lower the aggressiveness level is set, the fewer prefetches can be performed at one time due to more strict prefetching conditions, so that the prefetching accuracy can be relatively guaranteed and the memory bandwidth occupation can be reduced, while this will inevitably reduce the prefetching coverage.

Simultaneous Multithreading (SMT) technology (also called synchronous multithreading) is an important technology to improve the overall performance of CPU. It uses the multi- emission, out-of-order execution mechanism and so on of high-performance CPU core to execute instructions of multiple threads at the same time. Such one physical CPU core presents to software, and the operating system is multiple virtual CPU cores. When the modern multi-emission high-performance CPU core executes a single thread, its internal multiple execution units and hardware resources may not be fully utilized in most of the time. When the thread is running paused for some reasons, such as L2 cache Miss, the hardware execution unit can only idle, which results in a waste of hardware resources and reduces the performance-to-power ratio. In contrast, in the SMT mode, when one thread stops running, the other threads can still run, which improves the utilization of hardware resources, thereby improving the multithreading throughput, overall performance and performance-to-power ratio of the CPU core. It should be noted that the performance of thread running in SMT is often lower than its single-threaded mode due to sharing CPU core resources with other threads. Depending on the quantity of maximum active threads supported, SMT may be referred to as SMT 2 (up to two active threads), SMT 4 (up to four active threads), etc. For ease of description, an electronic device capable of implementing SMT technology may be described as an SMT electronic device or an SMT processor, etc.

In the case of SMT, the memory access subsystem, all levels of Cache (L1, L2, LLC) and the memory are required to process Demand requests and prefetch requests from multiple threads at the same time. The available cache capacity per thread will be greatly reduced and the pressure to access memory will be multiplied. This is more severe with SMT4. In the process of prefetching by prefetcher, too many inaccurate prefetch requests will lead to longer memory access delay and increased cache pollution, and these performance degradation problems of the prefetcher will have a greater negative impact on the performance of CPU, ultimately leading to performance degradation. This problem is more significant for the CPU that supports SMT.

Therefore, how to dynamically adjust the aggressiveness level of the prefetcher, and balance the accuracy and coverage of the prefetcher, thereby improving the prefetching performance, becomes particularly important.

To address the above-mentioned problems, embodiments of the present disclosure provide a data prefetching method and apparatus, an electronic device, an electronic apparatus, and a medium for adjusting an aggressiveness level at which a prefetcher prefetches according to performance data characterizing the usage rate of a memory, thereby enabling the prefetcher to dynamically adjust conditions under which prefetches are generated according to the set aggressiveness level, thus, accuracy and coverage of prefetching can be improved and overall operating performance of the electronic device can be enhanced.

The data prefetching method provided according to an embodiment of the present disclosure is applicable to an electronic device, which may include a memory, a cache, and a prefetcher. For example, the memory may be referred to as the DRAM memory. The cache may refer to a multi-level caching architecture, and as an example, may be a cache architecture that includes a three-level cache storage. The prefetcher may refer to any type of prefetcher, and may refer to a stride prefetcher as an example. Further, the prefetcher may be a first-level cache prefetcher or any-level cache prefetcher. Further, the quantity of prefetchers may be one or more. The data prefetching method according to an embodiment of the present disclosure may set an aggressiveness level separately for different prefetchers or set the same aggressiveness level for two or more prefetchers. Further, it will be appreciated that while expressed as a data prefetching method, the methods mentioned herein are applicable to both data prefetchers as well as instruction prefetchers.

Specifically, the method provided according to embodiments of the present disclosure includes acquiring performance data characterizing a usage rate of the memory; adjusting an aggressiveness level of the prefetcher according to the performance data, wherein the aggressiveness level is used to control a confidence condition for the prefetcher to generate prefetches and a quantity of the prefetches; and performing a prefetch operation according to the adjusted aggressiveness level.

As an implementation, the electronic device may be a SMT processor, i.e., capable of executing instructions from multiple threads simultaneously within one operating cycle.

The data prefetching method of the present disclosure will be described with reference to the accompanying drawings. In order to keep the following description of the embodiments of the present disclosure clear and concise, a detailed description of known functions and known components may be omitted. When any component of the disclosed embodiments appears in more than one drawings, the component is represented by the same or similar reference numerals in each drawing.

Fig. 2 shows a schematic flow diagram of a data prefetching method according to some embodiments of the present disclosure. The method includes steps S101-S103.

Step S101, acquiring performance data characterizing a usage rate of the memory.

Step S102, adjusting an aggressiveness level of the prefetcher according to the performance data, wherein the aggressiveness level is used to control a confidence condition for the prefetcher to generate prefetches and a quantity of the prefetches.

Step S103, performing a prefetch operation according to the adjusted aggressiveness level.

For a prefetcher in an electronic device, in order to ensure accuracy, the prefetcher may be controlled to issue fewer prefetch requests, e.g., by setting more strict prefetch conditions, which would unavoidably lose prefetch coverage. If the setup is such that more prefetch requests are made to improve the coverage, the accuracy will decrease and inevitably increase memory access pressure, which increases the prefetch delay. In particular, in the case of SMT, the memory access subsystem, all levels of Cache (L1, L2, LLC) and the memory are required to process Demand requests and prefetch requests from multiple threads at the same time. The available cache capacity per thread will be greatly reduced and the pressure to access memory will be multiplied, which is more severe in the case of SMT 4. Too many inaccurate prefetch requests may lead to long memory access delays and increased cache pollution, which may have a large negative impact on the performance of the CPU, ultimately leading to reduced performance. It is particularly important to dynamically adjust the aggressiveness of the prefetcher under SMT.

With regard to the above-mentioned prefetching characteristic, the present disclosure dynamically adjusts the aggressiveness level of a prefetcher according to performance data characterizing the usage rate of a memory, which is because the performance data of the usage rate of the memory can reflect the state of prefetching. If the usage rate of the memory is high, i.e., the memory access and the prefetching operation are at a relatively high level, and the memory bandwidth occupancy rate are increased, which will reduce the accuracy rate of prefetching and increase the prefetching delay. In this case, the prefetching condition may be adjusted to be more strict so as to reduce the memory access of the prefetching operation. If the memory usage rate is low, i.e., the memory access and the prefetch operation are at a relatively low level with lowe memory bandwidth occupancy and low prefetching latency, but this will reduce the prefetch coverage. In this case, the prefetch condition may be adjusted to be easy to increase memory accesses by the prefetch operation.

According to some embodiments of the present disclosure, the above performance data includes one or more of the following: average access delay of the memory, an occupancy rate of a miss-status handling register of the electronic device, a bandwidth usage rate of the memory; and an occupancy rate of a queue in an on-chip interconnection network of the electronic device.

By way of example, the average access delay of the memory may be embodied as the average access delay over a time window when prefetching data for the cache. If the access delay is at a higher level, the memory bandwidth occupancy is increased. If the access delay is at a lower level, the memory bandwidth occupancy is looser and more prefetch operations are possible. The specific steps for acquiring the average access delay of the memory will be described in detail below with reference to the accompanying drawings.

As an example, a Miss-status Handling Register (MSHR) of an electronic device are used to record each incomplete Cache Miss event, and the recorded information thereof generally includes an address, a thread identification, etc. The occupancy rate of the MSHR can characterize the memory usage rate. If the occupancy rate of the MSHR is high, it can reflect that there are more Cache Miss events of the prefetcher, namely, the prefetching accuracy decreases, and the memory usage rate is at a relatively high level. As an implementation, a hardware element may be added to the electronic device to count the average occupancy rate of the MSHR over a period of time, or a counter may be added to the MSHR Entry to record the average occupancy rate of the MSHR over a period of time.

As an example, the bandwidth usage rate of the DRAM memory may be provided by a memory controller in the electronic device as performance data to adjust the aggressiveness level of the prefetcher. As an example, the statistical occupancy may be given by the on-chip interconnect network as performance data to adjust the aggressiveness level of the prefetcher.

In the method according to an embodiment of the present disclosure, the aggressiveness level of the prefetcher may be dynamically adjusted according to the acquired performance data to control the confidence condition that the prefetcher generates prefetches and the quantity of prefetches. According to the logic for aggressiveness level adjustment, if the performance data indicates that the usage rate of the memory is high, i.e., the memory access and the prefetching operation are at a relatively high level, and the memory bandwidth occupancy rate increases, which will reduce the accuracy rate of prefetching and increase the prefetching delay. In this case, the prefetching condition may be adjusted to be more strict so as to reduce the memory access of the prefetching operation. If the performance data indicates that the memory usage rate is low, i.e., the memory access and the prefetch operation are at a relatively low level, the memory bandwidth occupancy is low, and the prefetch delay is low, but this will reduce the prefetch coverage. In this case, the prefetch condition may be adjusted to be easy to increase memory accesses by the prefetch operation.

As an implementation, the specific process of acquiring the average access delay of the memory in the case where the performance data includes the average access delay of the memory will be described next.

According to some embodiments of the present disclosure, the acquiring the average access delay of the memory includes: acquiring historical average access delay time of the memory before a time window; acquiring current average access delay time of the memory within the time window; and calculating a weighted average of the historical average access delay time and the current average access delay time. The calculated weighted average is taken as the average access delay of the memory. Specifically, the aggressiveness level of the prefetcher is adjusted according to the weighted average.

According to some embodiments of the present disclosure, improvements may be made to the architecture of the CPU in order to obtain an average access delay, for example, by configuring counters in the electronic device. According to some embodiments of the present disclosure, the electronic device is provided with a time window counter, a delay counter, a backfill counter and a historical delay counter. Specifically, the acquiring performance data characterizing the usage rate of the memory includes: recording the time window by the time window counter, wherein when the time window counter reaches a set threshold, triggering calculation of the average access delay and adjusting the aggressiveness level according to the average access delay; recording the total delay time of cache miss within the time window by the delay counter; recording total delay time of cache misses within the time window by the delay counter; recording the quantity of access backfill of the cache misses within the time window by the backfill counter; calculating the current average access delay time based on the total delay time of the cache misses within the time window and the quantity of access backfill, and performing a weighted average on the current average access delay time and the historical average access delay time to obtain the average access delay time.

As an example, the time window counter may be provided inthe CPU for counting CPU clock cycles (Cycle), e.g., by one per clock cycle count. If the time interval threshold is reached, the prefetcher aggressiveness level is adjusted and the time window counter is cleared. It will be appreciated that the time window counter is used as a trigger condition for the adjustment of the prefetcher's aggressiveness level. When the set time window threshold is reached, it will trigger to calculate an average access delay and adjust the prefetcher's aggressiveness level according to the calculated average access delay.

It will be appreciated that the adjusting the prefetcher aggressiveness level described herein may include increasing the aggressiveness level, decreasing the aggressiveness level, or maintaining the current aggressiveness level.

As other implementations, the time window counter may not only use Cycle to count, but also use the quantity of cache accesses, namely, incrementing by one to each access count. Alternatively, a cache access miss event can be used, namely, incrementing by one to each cache access miss count. Alternatively, the prefetcher's prefetch request (Prefetch Sent) events may also be used to count, i.e., incrementing by one per prefetch request sent event. It will be appreciated that other count trigger conditions may be employed by the time window counter and will not be enumerated herein.

As an example, a delay counter may be provided in the CPU for counting the average delay of accesses within a time window. In addition, it is also possible to add a time stamp field in the MSHR Entry, and at the time of Cache Miss, write the time stamp to the added time stamp field in the MSHR. When the Cache Miss's request data is backfilled, the time stamp in the MSHR is subtracted from the time at that time to obtain the delay interval for that access, which is added to the delay counter. The delay counter's data is cleared each time the time window counter reaches the threshold.

According to some embodiments of the present disclosure, the cache in the above-mentioned electronic computing device may be a multi-level cache architecture, for example, including an L1 Cache, an L2 Cache and a LLC Cache. As an example, the Cache Miss recorded by the delay counter is missing the last-level cache of the multi-level cache, i.e., an LLC Miss. As other examples, L1 Miss or L2 Miss are also appliable. It will be appreciated that since LLC Cache is closest to the memory, recording LLC Miss is more reflective of memory usage than L1 Miss or L2 Miss.

As an example, the backfill counter can be provided in the CPU for counting the total quantity of Cache Miss access backfill within a time window. The backfill counter increments by one when a piece of requested data of the Cache Miss is backfilled, and the data of the backfill counter is cleared every time the time window counter reaches a threshold.

As an example, a historical delay counter may be providedin the CPU to record the average delay calculated within various time windows in the past.

Specifically, when the time window counter reaches the count threshold (for example, recording up to N CPU clock cycles), the current average access delay time within the current window may be obtained by dividing the delay counter by the backfill counter, and then the current average access delay time and the historical average access delay time recorded by the historical delay counter are weighted averaged to calculate the average access delay time. As an example, the weight values of the current average access delay time and the historical average access delay time may be set to be the same. In addition, the new average access delay currently calculated may be updated to the historical delay counter as the historical average access delay time used in the next calculation.

According to the above process, the average access delay within a fixed time window can be obtained, and then the prefetch aggressiveness level of the prefetcher may be adjusted according to the average access delay. The prefetcher adjusts the process of prefetching according to the aggressiveness level, so as to improve the accuracy/coverage of prefetching, thereby improving the overall performance of CPU.

According to some embodiments of the present disclosure, the adjusting the aggressiveness level of the prefetcher according to the performance data includes: increasing an aggressiveness level of the prefetcher such that an amount of prefetching for the memory is increased in the event that the average access delay is less than a first threshold; and reducing the aggressiveness level of the prefetcher such that the amount of prefetching for the memory is reduced in the event that the average access delay is greater than a second threshold.

As an example, the first threshold may also be referred to as a rising threshold, for example, may be set equal to 80 nanoseconds. The second threshold may also be referred to as a falling threshold, for example, may be set equal to 120 nanoseconds.

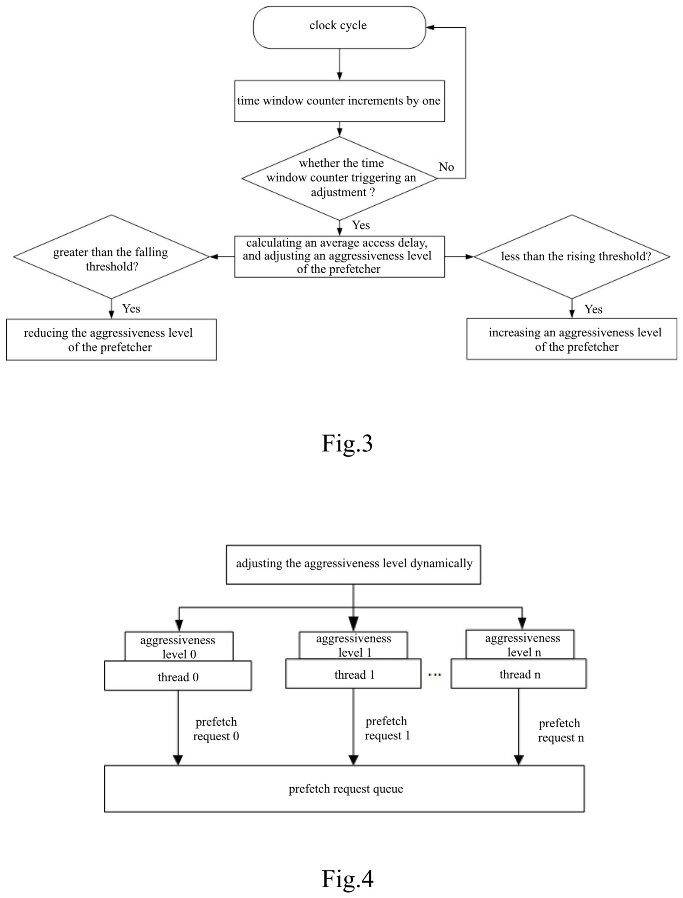

Fig. 3 shows a schematic diagram of adjusting prefetcher aggressiveness levels according to some embodiments of the present disclosure. First, the time window counter increments by one for each Cycle. When the time window counter reaches a set threshold, adjustment of the aggressiveness of the prefetcher is initiated. The current average access delay of the Cache Miss within the current time window may then be calculated from the delay counter and the backfill counter, and the value of (current window average access delay + historical access delay counter)/2 is updated to the historical access delay counter and compared to the rising threshold and falling threshold for adjusting the aggressiveness level of the prefetcher. If it is greater than the falling threshold, the aggressiveness level of the prefetcher is reduced. If it is less than the rising threshold, the aggressiveness level of the prefetcher is increased.

In general, the process of prefetcher aggressiveness level adjustment may include that, on the one hand, if the calculated average access delay time of the Cache Miss is greater than the falling threshold (120 nanoseconds), it indicates that the current prefetch access delay is higher and the prefetch accuracy decreases. In order to avoid problems such as too many inaccurate prefetch requests leading to longer access delay and increased polluting cache data, the aggressiveness level of the prefetcher may be reduced, thereby making the prefetcher generate more stringent conditions. For example, it requires a higher confidence condition, and appropriately reduces the quantity of one-time prefetches, thereby reducing the memory access pressure and improving the prefetch accuracy. On the other hand, if the calculated average access delay of the Cache Miss is less than the rising threshold (80 nanoseconds), it indicates that the current prefetch access delay is lower, i.e., the memory usage rate is lower, more access operations can be performed, thereby increasing the aggressiveness level of the prefetcher, making the prefetcher condition looser, e.g., requiring a lower confidence condition, and appropriately increasing the quantity of one-time prefetches, thereby increasing prefetch coverage. On the other hand, if the calculated average access delay for Cache Miss is between the rising threshold and the falling threshold, the current aggressiveness level may be maintained.

Taking the prefetcher as the Stride prefetcher as an example, Table 1 shows an example table of Stride prefetcher aggressiveness levels:

**Table 1**

| Aggressiveness level | Prefetch generation condition | Quantity of prefetches |
|---|---|---|
| 0 | Confidence ≥ 6 | 1 |
| 1 | Confidence ≥ 5 | 2 |
| 2 | Confidence ≥ 4 | 2 |
| 3 | Confidence ≥ 3 | 3 |
| 4 | Confidence ≥ 2 | 3 |

As an example, for a Stride prefetcher, the initial aggressiveness level may be set to 2, i.e., the confidence condition that generating prefetching is a Confidence greater than or equal to 4 and the quantity of one-time prefetches is at most 2. The aggressiveness level, confidence condition, and the quantity of prefetches of the Stride prefetcher may be adjusted with reference to the process described in conjunction with Fig. 3 with reference to Table 1.

As some implementations, the adjustment to the prefetcher parameters based on the aggressiveness level include, but are not limited to, the confidence condition for generating prefetches and the quantity of prefetches per generation, and may also adjust parameters such as address distance of prefetches, without limitation herein.

As described above, in the case of SMT, memory access pressure will inevitably be further increased compared with that of single thread. Too many inaccurate prefetch requests may lead to long memory access delays and increased cache pollution, which may have a large negative impact on the performance of the CPU, ultimately leading to reduced running performance.

The data prefetching method provided according to an embodiment of the present disclosure is applicable to a processor capable of implementing SMT. Specifically, in the case of SMT, the acquiring performance data characterizing the usage rate of the memory includes: for each thread of the plurality of threads, respectively acquiring performance data characterizing the usage rate of the memory. The adjusting the aggressiveness level of the prefetcher according to the performance data includes adjusting the aggressiveness level of the prefetcher for each thread based on the respective performance data, wherein the aggressiveness level is set for each thread in the prefetcher.

That is, in the case of multithread, the average access delay of the memory may be statistically computed separately for different threads, thereby setting the aggressiveness level separately for each thread.

Fig. 4 shows a schematic diagram of adjusting prefetcher aggressiveness levels for SMT according to some embodiments of the present disclosure. As shown in Fig. 4, the aggressiveness levels are set for multiple threads, respectively, for the process of dynamically adjusting the aggressiveness levels described in conjunction with Fig. 3. For example, the CPU can process instructions for four threads simultaneously, i.e., n equals 3, and the aggressiveness level at which it prefetches may be adjusted for Thread 0, Thread 1, Thread 2, and Thread 3, respectively. By way of example, the information recorded in the MSHR includes information such as a thread number, from which prefetch requests from different threads can be distinguished to account for their average access delay, respectively.

As some implementations, the adjustment process is not limited to counting the average access delay for each thread individually, but may use the amount of access delay shared among threads to adjust the aggressiveness level shared among threads in the prefetcher, without limitation.

Embodiments of the present disclosure provide a data prefetching method that is capable of dynamically adjusting the prefetcher's aggressiveness level, monitoring the delay of memory accesses via the MSHR and dynamically adjusting the prefetcher's aggressiveness level according to the delay. The above method is particularly useful in the case of SMT, where the SMT is enabled and the access delay is high, the aggressiveness of prefetching is reduced, thereby the quantity of prefetches is reduced to improve prefetching accuracy, thus, memory bandwidth stress and cache pollution problems can be alleviated. In the case where the SMT is enabled and the access delay is not high, the aggressiveness of prefetching is increased and the quantity of prefetches is increased to improve the prefetch coverage.

According to the method provided by the embodiments of the present disclosure, the access delay is monitored and the aggressiveness of the prefetcher is dynamically adjusted, not only limited to throttling the prefetcher, but also increasing the aggressiveness of the prefetcher, which makes the adjustment scheme more real-time and targeted. In addition, multiple prefetchers can be integrated at the same time, and the degree of aggressiveness of multiple prefetchers can be dynamically regulated. For different prefetchers, more fine adjustment can be made according to the aggressiveness level to exert the optimal performance of prefetchers.

In summary, with the data prefetching method provided by the embodiments of the present disclosure, the aggressiveness level of prefetching performed by the prefetcher may be adjusted according to performance data characterizing the usage rate of the memory. As an implementation, the average access delay of the memory can be compared with the set threshold to realize dynamically adjusting the aggressiveness level of the prefetcher, such that the prefetcher can dynamically adjust the conditions of prefetching generation according to the set aggressiveness level, thus, the accuracy and coverage rate of prefetching can be improved, and the overall operating performance of the electronic device can be enhanced.

According to another aspect of the present disclosure, an electronic device is further provided. An electronic device according to an embodiment of the present disclosure may include a processor core (for example CPU core), a memory, a cache, and a prefetcher. The processor core may be configured for implementing the steps of acquiring performance data characterizing the usage rate of the memory; adjusting an aggressiveness level of the prefetcher according to the performance data, wherein the aggressiveness level is used to control a confidence condition for the prefetcher to generate prefetches and a quantity of the prefetches; The prefetcher may be configured for performing a prefetch operation according to the adjusted aggressiveness level.

As an implementation, the electronic device may be a synchronous multithreading (SMT) processor, i.e., capable of executing instructions from multiple threads simultaneously within one operating cycle.

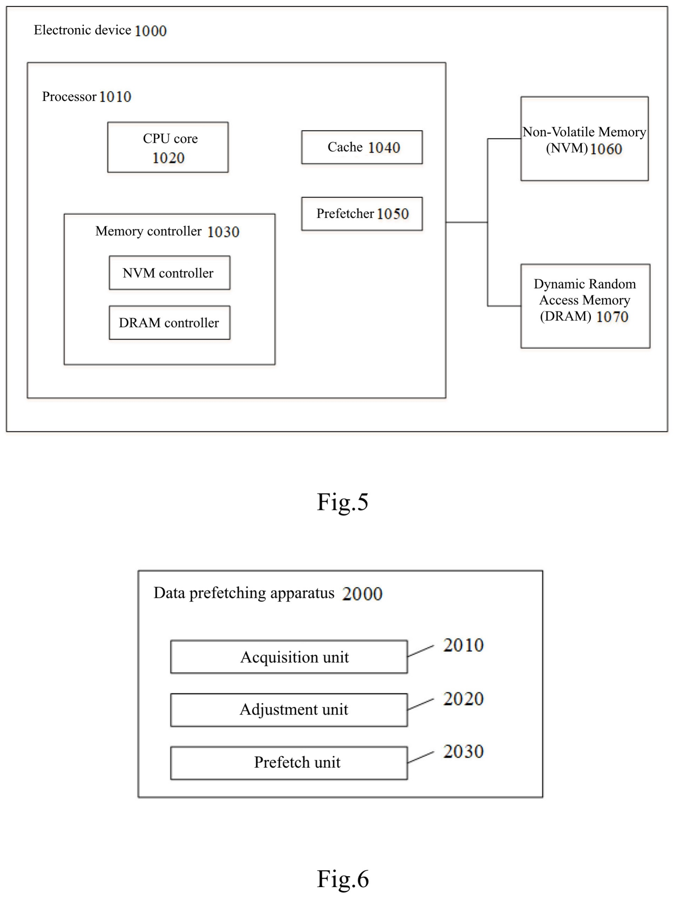

Fig. 5 shows a schematic block diagram of an electronic device according to some embodiments of the present disclosure. As shown in Fig. 5, the electronic device 1000 may include a processor 1010 and a non-volatile memory (NVM) 1060 and a dynamic random access memory (DRAM) 1070. In particular, the processor 1010 may be composed of a CPU core 1020, a memory controller 1030, a cache 1040, and a prefetcher 1050. It will be appreciated that the composition of the electronic device is not so limited and may include other necessary components.

The DRAM 1070 and the NVM 1060 are memories of the electronic device 1000. The connection relationship of the electronic device shown in Fig. 5 is merely one example of an electronic device having a hybrid memory architecture. The DRAM 1070 and the NVM 1060 shown in Fig. 5 are merely one example of multilevel memories in the electronic device. In practical applications, the internal structure of the electronic device is not particularly limited. The electronic device may further include other memories besides the DRAM 1070 and the NVM 1060.

The processor 1010 is the core component of the electronic device 1000. The processor 1010 may call different software programs in the electronic device 1000 to realize different functions. For example, the processor 1010 can enable access to the DRAM 1070 and the NVM 1060. The processor 1010 may be a central processing unit (CPU). In addition to the CPU, the processor may be other application specific integrated circuit, ASIC. The electronic device may further include a plurality of processors. Alternatively, the processor may be a single-core processor or a multi-core processor. In a multi-core processor architecture, multiple processor cores (CPU cores) may be included in a processor. For example, as shown in Fig. 5, one or more CPU cores 1020 may be included in a processor 1010.

The memory controller 1030 is an important component of the electronic device 1000 that internally controls the memory and enables the memory to exchange data with the processor 1010 (e.g., CPU). In one case, the memory controller 1030 may be internal to the Northbridge chip. Alternatively, the memory controller 1030 may be integrated into the processor 1010 (as shown in Fig. 5). In particular, the memory controller 1030 may be integrated on a substrate of the processor 1010. It will be appreciated that when the memory controller 1030 is internal to the Northbridge chip, the memory controller needs to exchange data with the processor by the Northbridge chip, resulting in a large delay in the data. When the memory controller 1030 is integrated into the processor 1010, the memory controller 1030 may exchange data directly with the processor.

As shown in Fig. 5, the memory controller 1030 may be coupled to an NVM controller and a DRAM controller. The DRAM controller controls access to the DRAM 1070 and the NVM controller controls access to the NVM 1060. The NVM controller and the DRAM controller may also be referred to as media controllers. In one implementation, the NVM controller and the DRAM controller may be separate from the memory controller 1030. Alternatively, the NVM controller and the DRAM controller may be integrated into the memory controller 1030, logically as part of the memory controller 1030 (as shown in Fig. 5). In the disclosed embodiment, the memory controller 1030 may connect the NVM 1060 and the DRAM 1070 via a memory bus (e.g., a double rate DDR bus). It will be appreciated that, in practice, the NVM controller may also communicate with the NVM 1060 via other types of buses, such as a PCI high speed bus, a Direct Media Interface (DMI) bus, etc.

The memory controller 1030 may be connected to the NVM 1060 and the DRAM 1070 in the manner shown in Fig. 5. For example, the memory controller 1030 may be connected to the DRAM 1070 directly via a memory bus. Alternatively, the memory controller 1030 may be connected to the DRAM 1070 via the memory bus, and the DRAM 1070 may be connected to the NVM 1060 via the memory bus.

As previously mentioned, in the electronic device shown in Fig. 5, the DRAM 1070 may be connected to the processor 1010 via the memory bus. The DRAM 1070 has the advantage of fast access. The processor 1010 has high-speed access to the DRAM 1070 and read or write to the DRAM 1070. In general, the DRAM 1070 is used to store various running software, input and output data and information exchanged with external memory, etc. in the operating system. However, the DRAM 1070 is volatile and the information in the DRAM 1070 is no longer saved when power is turned off.

The new NVM can be used as a memory since it can be addressed by Byte, writing data in units of bit into a non-volatile memory. In the disclosed embodiment, the NVM 1060 may be used in conjunction with the DRAM 1070 as the memory of electronic device 1000. Compared with the DRAM 1070, the NVM 1060 can save data better because of its non-volatility. In embodiments of the present disclosure, the non-volatile memory that can be used as memory may be referred to as a storage class memory, SCM.

Note that the DRAM is a kind of volatile memory, and other random access memories (RAM) can be used as the memory of a computer system in practical applications. For example, the static random access memory (SRAM) may also be used as the memory of the computer system. The NVM 1060 shown in Fig. 5 may include novel non-volatile memories such as a phase-change random access memory (PCM), a resistive random access memory (RRAM), a magnetic random access memory (MRAM) or an ferroelectric random access memory (FRAM). The specific type of NVM in the embodiments of the present disclosure is not limited herein.

Since the access speed of NVM 1060 is relatively slow compared with that of DRAM 1070, the NVM 1060 is generally used as the main memory of the system. The DRAM 1070 is generally used as the Cache of NVM 1060, so as to make up the defect that the access speed of NVM 1060 is slow and improve the memory access speed. As shown in Fig. 5, in the electronic device shown in Fig. 5, the DRAM 1070 acts as a cache for the NVM 1060. When the memory controller 1030 receives a memory access request sent by the processor 1010, it first determines whether the target address in the memory access request (i.e., the address of the memory block to be accessed) hits the DRAM 1070 to determine whether the data to be accessed is stored in the DRAM 1070. When it is determined that the target address in the access request hits DRAM 1070, the memory controller 1030 may retrieve the data to be accessed directly from the DRAM 1070 to reduce access delay. When the memory controller 1030 determines that the target address in the access request does not hit DRAM 1070, the memory controller 1030 retrieves the data to be accessed from the NVM 1060.

According to an embodiment of the present disclosure, for the electronic device 1000 shown in Fig. 5, the CPU core 1020 may be configured for acquring the performance data characterizing the usage rate of the memory (e.g., DRAM 1070); and adjusting an aggressiveness level of the prefetcher 1050 according to the performance data, wherein the aggressiveness level is used for controlling a confidence condition that the prefetcher 1050 generates prefetches and a quantity of prefetches. The prefetcher 1050 may be configured for performing prefetch operations according to the adjusted aggressiveness level.

According to some embodiments of the present disclosure, the above performance data includes one or more of average access delay of the memory, an occupancy rate of a miss-status handling register of the electronic device, a bandwidth usage rate of the memory; and an occupancy rate of a queue in an on-chip interconnection network of the electronic device.

According to some embodiments of the present disclosure, the prefetcher 1050 is a Stride Prefetcher.

According to some embodiments of the present disclosure, where the performance data includes an average access delay of the memory, the acquiring performance data characterizing the usage rate of the memory by the CPU core 1020 includes acquiring historical average access delay time of the memory before a time window; acquiring current average access delay time of the memory within the time window; and calculating a weighted average of the historical average access delay time and the current average access delay time, wherein the weighted average is taken as the average access delay of the memory.

According to some embodiments of the present disclosure, the electronic device is provided with a time window counter, a delay counter, a backfill counter and a historical delay counter. Specifically, the acquiring performance data characterizing the usage rate of the memory by the CPU core 1020 includes: recording the time window by the time window counter, wherein when the time window counter reaches a set threshold, triggering calculation of the average access delay and adjusting the aggressiveness level according to the average access delay; using a delay counter to record the total delay time of a cache miss in a time window; recording total delay time of a cache misses within the time window by the delay counter; recording the quantity of access backfill of the cache misses within the time window by the backfill counter; calculating the current average access delay time based on the total delay time of the cache misses within the time window and the quantity of access backfill, and performing a weighted average on the current average access delay time and the historical average access delay time to obtain the average access delay time.

According to some embodiments of the present disclosure, the adjusting the aggressiveness level of the prefetcher by CPU core 1020 according to the performance data includes: increasing an aggressiveness level of the prefetcher such that an amount of prefetching for the memory is increased in the event that the average access delay is less than a first threshold; and reducing the aggressiveness level of the prefetcher such that the amount of prefetching for the memory is reduced in the event that the average access delay is greater than a second threshold.

According to some embodiments of the present disclosure, the electronic device synchronously processes a plurality of threads, and the acquiring the performance data characterizing the usage rate of the memory includes: for each thread of the plurality of threads, respectively acquiring performance data characterizing the usage rate of the memory. The adjusting the aggressiveness level of the prefetcher based on the performance data includes: adjusting the aggressiveness level of the prefetcher for each thread based on the respective performance data, wherein the aggressiveness level is set for each thread in the prefetcher.

According to some embodiments of the present disclosure, the recording a time window with a time window counter by the CPU core 1020 includes one of: for a processor clock cycle of the electronic device, the time window counter increments by one for each clock cycle; for a cache access of the electronic device, the time window counter increments by one for each cache access; for a cache access miss event of the electronic device, the time window counter increments by one for each cache access miss event; or for a prefetch request of the prefetcher, the time window counter increments by one for each prefetch request.

According to some embodiments of the present disclosure, the cache 1040 may include a multi-level cache, wherein the cache missesare missing the last-level cache of the multi-level cache, i.e., LLC Miss.

The electronic device according to an embodiment of the present disclosure is capable of implementing a specific implementation of functions of data access, prefetching, etc. Furthermore, the electronic device according to an embodiment of the present disclosure is specifically capable of implementing the steps of the data prefetching method according to some embodiments of the present disclosure described above in conjunction with the accompanying drawings, and the description thereof will not be repeated here. The electronic device utilizing embodiments of the present disclosure can perform similar data prefetching processes and achieve similar technical effects.

According to yet another aspect of the present disclosure, a data prefetching apparatus is provided. Fig. 6 shows a schematic block diagram of a data prefetching apparatus according to some embodiments of the present disclosure.

As shown in Fig. 6, the data prefetching apparatus 2000 includes an acquisition unit 2010, an adjustment unit 2020, and a prefetch unit 2030. According to some embodiments of the present disclosure, the acquisition unit 2010 may be configured for acquiring performance data characterizing the usage rate of the memory. The adjustment unit 2020 may be configured for adjusting an aggressiveness level of the prefetcher according to the performance data, wherein the aggressiveness level is used to control a confidence condition for the prefetcher to generate prefetches and a quantity of the prefetches. The prefetch unit 2030 may be configured for performing prefetch operations according to the adjusted aggressiveness level.

According to some embodiments of the present disclosure, the above performance data includes one or more of average access delay of the memory, an occupancy rate of a miss-status handling register of the electronic device, a bandwidth usage rate of the memory; and an occupancy rate of a queue in an on-chip interconnection network of the electronic device.

According to some embodiments of the present disclosure, where the performance data includes an average access delay of the memory, the acquiring performance data characterizing the usage rate of the memory by the acquisition unit 2010 includes acquiring historical average access delay time of the memory before a time window; acquiring current average access delay time of the memory within the time window; and calculating a weighted average of the historical average access delay time and the current average access delay time, wherein the weighted average is taken as the average access delay of the memory.

According to some embodiments of the present disclosure, the acquiring performance data characterizing the usage rate of the memory by the acquisition unit 2010 includes: recording the time window by the time window counter, wherein when the time window counter reaches a set threshold, triggering calculation of the average access delay and adjusting the aggressiveness level according to the average access delay; using a delay counter to record the total delay time of a cache miss in a time window; recording total delay time of a cache misses within the time window by the delay counter; recording the quantity of access backfill of the cache misses within the time window by the backfill counter; calculating the current average access delay time based on the total delay time of the cache misses within the time window and the quantity of access backfill, and performing a weighted average on the current average access delay time and the historical average access delay time to obtain the average access delay time.

According to some embodiments of the present disclosure, the adjusting the aggressiveness level of the prefetcher by the adjustment unit 2020 according to the performance data includes: increasing an aggressiveness level of the prefetcher such that an amount of prefetching for the memory is increased in the event that the average access delay is less than a first threshold; and reducing the aggressiveness level of the prefetcher such that the amount of prefetching for the memory is reduced in the event that the average access delay is greater than a second threshold.

According to some embodiments of the present disclosure, the acquiring performance data characterizing the usage rate of the memory by the acquisition unit 2010 includes: for each thread of the plurality of threads, respectively acquiring performance data characterizing the usage rate of the memory. The adjusting the aggressiveness level of the prefetcher by adjustment unit 2020 according to the performance data includes adjusting the aggressiveness level of the prefetcher for each thread based on the respective performance data, wherein the aggressiveness level is set for each thread in the prefetcher.

According to some embodiments of the present disclosure, the recording a time window with a time window counter includes one of: for a processor clock cycle of the electronic device, the time window counter increments by one for each clock cycle; for a cache access of the electronic device, the time window counter increments by one for each cache access; for a cache access miss event of the electronic device, the time window counter increments by one for each cache access miss event; or for a prefetch request of the prefetcher, the time window counter increments by one for each prefetch request.

According to some embodiments of the present disclosure, the cache includes a multi-level cache, and the cache missesare missing the last-level cache of the multi-level cache.

According to some embodiments of the present disclosure, the prefetcher is a stride prefetcher.

Specifically, the data prefetching apparatus 2000 according to an embodiment of the present disclosure can implement the steps of the data prefetching method according to an embodiment of the present disclosure described above in conjunction with the accompanying drawings and achieve similar technical effects, which will not be described in detail here.

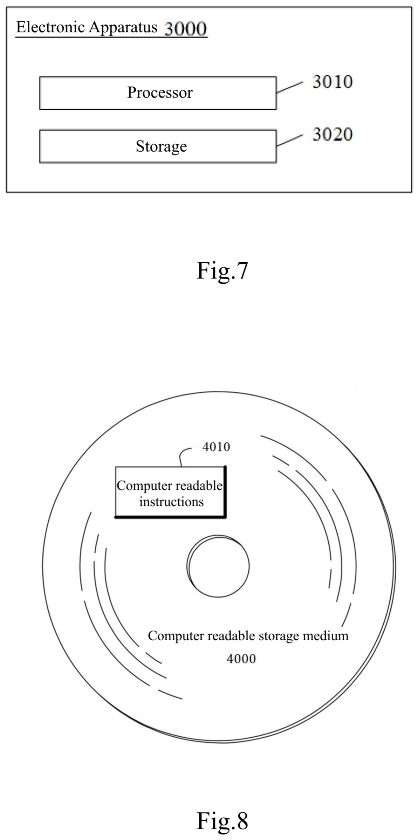

According to yet another aspect of the present disclosure, an electronic apparatus is provided. Fig. 7 shows a schematic block diagram of an electronic apparatus according to some embodiments of the present disclosure.

As shown in Fig. 7, the electronic apparatus 3000 may include a processor 3010 and a storage 3020. According to some embodiments of the present disclosure, the storage 3020 has stored therein computer readable code that, when executed by the processor 3010, may perform the data prefetching method provided according to embodiments of the present disclosure.

The processor 3010 may perform various actions and processes according to programs stored in the storage 3020. In particular, the processor 3010 may be an integrated circuit having signal processing capabilities. The general purpose processor may be a microprocessor or the processor may be any conventional processor or the like. For example, the processor may refer to a processor capable of implementing SMT.

The storage 3020 stores computer readable code that, when executed by the processor 3010, causes the processor to implement a data prefetching method according to some embodiments of the present disclosure. The storage 3020 herein may be either a volatile memory or a nonvolatile memory, or may include both the volatile and nonvolatile memory. It should be noted that the storage described herein may be any suitable type of storage. By way of example, the processor can implement the steps of the data prefetching method described above in conjunction with the accompanying drawings by executing the computer readable code in the storage 3020.

According to yet another aspect of the present disclosure, a non-transitory computer-readable storage medium is also provided. Fig. 8 shows a schematic diagram of a computer-readable storage medium according to some embodiments of the disclosure.

As shown in Fig. 8, the computer readable storage medium 4000 has stored thereon computer readable instructions 4010. The data prefetching method described with reference to the above accompanying drawings may be performed when the computer readable instructions 4010 are executed by a processor. The computer-readable storage media includes, but is not limited to, a volatile storage and/or a nonvolatile storage. The volatile memory may for example include a random access memory (RAM) and/or a cache storage (cache) etc. The non-volatile memory may include, for example, a read only memory (ROM), a hard disk, a flash memory, etc. For example, the computer-readable storage medium 4000 may be connected to an electronic device such as a computer. Then, in the case where the electronic device executes the computer-readable instructions 4010 stored on the computer-readable storage medium 4000, the data prefetching method provided according to an embodiment of the present disclosure as described above can be performed.

Embodiments of the present disclosure provide a data prefetching method and apparatus, an electronic device, an electronic apparatus, and a medium for adjusting an aggressiveness level at which a prefetcher prefetches according to performance data characterizing the usage rate of the memory, thereby enabling the prefetcher to dynamically adjusting the conditions under which prefetches are generated according to the set aggressiveness level, which improves accuracy and coverage of prefetching and overall operating performance of the electronic device.

In addition, although various references are made to certain units in electronic devices and electronic apparatuses according to the embodiments disclosed herein, any number of different units may be used and run on clients and/or servers. The units are only illustrative, and different aspects of methods, electronic devices, and electronic apparatuses may use different units.

Ordinary technicians in this field can understand that all or part of the steps in the above method can be completed by instructing relevant hardware through computer programs, which can be stored in computer-readable storage media such as read-only memory, magnetic disks, or optical disks. Optionally, all or part of the steps in the above embodiments can also be implemented using one or more integrated circuits. Correspondingly, each module/unit in the above embodiments can be implemented in the form of hardware or software functional modules. This disclosure is not limited to any specific form of combination of hardware and software.

Unless otherwise defined, terms used herein have the same meanings as those of ordinary skill in the art to which this disclosure relates. It should also be understood that terms such as those defined in regular dictionaries should be interpreted as having meanings consistent with their meanings in the context of the relevant technology, and should not be interpreted in an idealized or overly formal sense unless explicitly defined in this way.

The above is an explanation of the present disclosure and should not be considered as a limitation on it. Although several exemplary embodiments of the present disclosure have been described, those skilled in the art will readily understand that many modifications can be made to the exemplary embodiments without departing from the novel teachings and advantages of the present disclosure. Therefore, all these modifications are intended to be included within the scope of the present disclosure as defined by the claims. It should be understood that the above is an explanation of the present disclosure and should not be construed as limited to the specific embodiments disclosed, and modifications to the disclosed embodiments and other embodiments are included within the scope of the appended claims. This disclosure is limited by the claims and their equivalents.

## Claims

1. A data prefetching method, wherein the method is applicable to an electronic device comprising a memory, a cache and a prefetcher, and the method comprises:
acquiring performance data characterizing a usage rate of the memory;
adjusting an aggressiveness level of the prefetcher according to the performance data, wherein the aggressiveness level is used to control a confidence condition for the prefetcher to generate prefetches and a quantity of the prefetches; and
performing a prefetch operation according to the adjusted aggressiveness level.

2. The method according to claim 1, wherein the performance data comprises one or more of:
an average access delay of the memory;
an occupancy rate of a miss-status handling register of the electronic device;
a bandwidth usage rate of the memory; and
an occupancy rate of a queue in an on-chip interconnection network of the electronic device.

3. The method according to claim 2, wherein, in a case that the performance data comprises the average access delay of the memory, the acquiring performance data characterizing a usage rate of the memory comprises:
acquiring historical average access delay time of the memory before a time window;
acquiring current average access delay time of the memory within the time window; and
calculating a weighted average of the historical average access delay time and the current average access delay time, wherein the weighted average is served as the average access delay of the memory.

4. The method according to claim 3, wherein the electronic device is provided with a time window counter, a delay counter, a backfill counter and a historical delay counter; and the acquiring the performance data characterizing the usage rate of the memory comprises:
recording the time window by the time window counter, wherein when the time window counter reaches a set threshold, triggering calculation of the average access delay and adjusting the aggressiveness level according to the average access delay;
recording total delay time of cache misses within the time window by the delay counter;
recording the quantity of access backfill of the cache misses within the time window by the backfill counter;
recording the historical average access delay time before the time window by the historical delay counter; and
calculating the current average access delay time based on the total delay time of the cache misses within the time window and the quantity of access backfill, and performing a weighted average on the current average access delay time and the historical average access delay time to obtain the average access delay time.

5. The method according to claim 4, wherein the adjusting an aggressiveness level of the prefetcher according to the performance data comprises:
increasing an aggressiveness level of the prefetcher such that an amount of prefetching for the memory is increased in response to the average access delay is less than a first threshold; and
reducing the aggressiveness level of the prefetcher such that the amount of prefetching for the memory is reduced in response to the average access delay is greater than a second threshold.

6. The method according to any one of claims 1-5, wherein the electronic device synchronously processes a plurality of threads, and the acquiring the performance data characterizing the usage rate of the memory comprises:
for each thread of the plurality of threads, respectively acquiring performance data characterizing the usage rate of the memory; and
the adjusting an aggressiveness level of the prefetcher according to the performance data comprises:
adjusting the aggressiveness level of the prefetcher for each thread based on the respective performance data, wherein the aggressiveness level is set for each thread in the prefetcher.

7. The method according to claim 4, wherein the recording the time window by the time window counter comprises one of:
for a processor clock cycle of the electronic device, the time window counter increments by one for each clock cycle;
for a cache access of the electronic device, the time window counter increments by one for each cache access;
for a cache access miss event of the electronic device, the time window counter increments by one for each cache access miss event; or
for a prefetch request of the prefetcher, the time window counter increments by one for each prefetch request.

8. The method according to claim 4, wherein the cache comprises a multi-level cache, and the cache misses are missing a last-level cache of the multi-level cache.

9. An electronic device, wherein the electronic device comprises a processor core, a memory, a cache, and a prefetcher, wherein
the processor core is configured to: acquire performance data characterizing the usage rate of the memory, and adjust an aggressiveness level of the prefetcher according to the performance data, wherein the aggressiveness level is used to control a confidence condition for the prefetcher to generate prefetches and a quantity of the prefetches; and
the prefetcher is configured to perform a prefetch operation according to the adjusted aggressiveness level.

10. The electronic device according to claim 9, wherein the performance data comprises one or more of:
an average access delay of the memory;
an occupancy rate of a miss-status handling register of the electronic device;
a bandwidth usage rate of the memory; and
an occupancy rate of a queue in an on-chip interconnection network of the electronic device.

11. The electronic device according to claim 10, wherein, in a case that the performance data comprises the average access delay of the memory, the acquiring performance data characterizing a usage rate of the memory by the processor core comprises:
acquiring historical average access delay time of the memory before a time window;
acquiring current average access delay time of the memory within the time window; and
calculating a weighted average of the historical average access delay time and the current average access delay time, wherein the weighted average is served as the average access delay of the memory.

12. The electronic device according to claim 11, wherein the electronic device is provided with a time window counter, a delay counter, a backfill counter and a historical delay counter; and the acquiring the performance data characterizing the usage rate of the memory by the processor core comprises:
recording the time window by the time window counter, wherein when the time window counter reaches a set threshold, triggering calculation of the average access delay and adjusting the aggressiveness level according to the average access delay;
recording total delay time of cache misses within the time window by the delay counter;
recording the quantity of access backfill of the cache misses within the time window by the backfill counter;
recording the historical average access delay time before the time window by the historical delay counter; and
calculating the current average access delay time based on the total delay time of the cache misses within the time window and the quantity of access backfill, and performing a weighted average on the current average access delay time and the historical average access delay time to obtain the average access delay time.

13. The electronic device according to claim 12, wherein the adjusting the aggressiveness level of the prefetcher according to the performance data by the processor core comprises:
increasing an aggressiveness level of the prefetcher such that an amount of prefetching for the memory is increased in response to the average access delay is less than a first threshold; and
reducing the aggressiveness level of the prefetcher such that the amount of prefetching for the memory is reduced in response to the average access delay is greater than a second threshold.

14. The electronic device according to any one of claims 9-13, wherein the electronic device synchronously processes a plurality of threads, and the acquiring the performance data characterizing the usage rate of the memory comprises:
for each thread of the plurality of threads, respectively acquiring performance data characterizing the usage rate of the memory; and
the adjusting an aggressiveness level of the prefetcher according to the performance data comprises:
adjusting the aggressiveness level of the prefetcher for each thread based on the respective performance data, wherein the aggressiveness level is set for each thread in the prefetcher.

15. The electronic device according to claim 12, wherein the cache comprises a multi-level cache, and the cache missesare missing a last-level cache of the multi-level cache.

16. A data prefetching apparatus, comprising:
an acquisition unit, configured to acquire performance data characterizing the usage rate of the memory;
an adjustment unit, configured to adjust an aggressiveness level of the prefetcher according to the performance data, wherein the aggressiveness level is used to control a confidence condition for the prefetcher to generate prefetches and a quantity of the prefetches; and
a prefetch unit, configured to perform a prefetch operation according to the adjusted aggressiveness level.

17. The data prefetching apparatus according to claim 16, wherein, in a case that the performance data comprises the average access delay of the memory, the acquiring performance data characterizing the usage rate of the memory comprises:
acquiring historical average access delay time of the memory before a time window;
acquiring current average access delay time of the memory within the time window; and
calculating a weighted average of the historical average access delay time and the current average access delay time, wherein the weighted average is served as the average access delay of the memory.

18. The data prefetching apparatus according to claim 16, wherein the data prefetching apparatus synchronously processes a plurality of threads, and the acquiring the performance data characterizing the usage rate of the memory comprises:
for each thread of the plurality of threads, respectively acquiring performance data characterizing the usage rate of the memory; and
the adjusting an aggressiveness level of the prefetcher according to the performance data comprises:
adjusting the aggressiveness level of the prefetcher for each thread based on the respective performance data, wherein the aggressiveness level is set for each thread in the prefetcher.

19. An electronic apparatus, wherein the electronic apparatus comprises at least one processor and at least one storage having stored thereon computer readable code, wherein the computer readable code, when executed by the at least one processor, causes the at least one processor to perform the steps of the method according to any one of claims 1-8.

20. A non-transitory computer-readable storage medium having stored thereon computer-readable instructions, wherein the computer-readable instructions, when executed by a processor, cause the processor to perform the steps of the method according to any one of claims 1-8.
